# FASCICULE DE BREVET EUROPEEN

(11) **EP 0 459 894 B1**
(45) Date de publication et mention de la délivrance du brevet: **15.06.1994**
(21) Numéro de dépôt: 91401385.9
(22) Date de dépôt: 29.05.1991
(51) Int. Cl.: H02K 5/26, F02B 67/06

(54) **Alternateur, notamment pour véhicules automobiles, et son dispositif de réglage de la tension de la courroie**
Wechselstromerzeuger, insbesondere für Kraftfahrzeuge, und zugehörige Riemenspannvorrichtung
Alternator, especially for motor vehicles, and belt tensioning device therefor

(30) Priorité: 30.05.1990 FR 9006703
(43) Date de publication de la demande: 04.12.1991
(73) Titulaire: VALEO EQUIPEMENTS ELECTRIQUES MOTEUR, 94000 Créteil (FR)
(72) Inventeur: Perrier, Pierre, F-75013 Paris (FR); Abadia, Roger, F-93330 Neuilly-Plaisance (FR); Messaoudi, Pascal, F-91130 Ris- Orangis (FR)
(74) Mandataire: Gamonal, Didier

(56) Documents cités:
- AT-B- 130 902
- DE-A- 2 106 975
- DE-B- 1 104 280

## Description

La présente invention concerne d'une manière générale un alternateur notamment pour véhicules automobiles et plus particulièrement son dispositif de réglage de la tension de la courroie entraînant ledit alternateur.

On sait que les alternateurs équipant des véhicules automobiles sont entraînés en rotation par l'intermédiaire d'une poulie qui coopère avec une courroie, ladite courroie étant elle-même entraînée par une poulie montée en bout du vilebrequin du moteur à combustion interne.

En général, la courroie passe en outre sur une troisième poulie servant par exemple à l'entraînement de la pompe à eau ou du ventilateur du moteur.

Etant donné qu'il est nécessaire d'assurer une tension convenable à la courroie, on monte, de manière usuelle, l'alternateur de façon que le réglage de sa position permette d'assurer la tension de la courroie.

Pour ce faire, comme par exemple dans le brevet français 2 098 481, l'alternateur comporte une première oreille, dans un alésage de laquelle tourillonne un axe solidaire du bloc-moteur ; et une deuxième oreille solidarisée par un boulon avec un bras articulé comportant un évidement oblong à travers lequel passe un boulon assurant sa fixation sur le bloc-moteur par l'intermédiaire d'un bras de maintien. L'ensemble de l'alternateur est déplacé angulairement avec le bras basculant de manière à régler la tension de la courroie et à l'aide du bras de maintien, la tension de la courroie est maintenue à sa valeur.

Dans ce type de montage on a constaté qu'il arrivait fréquemment, en raison des vibrations qui se produisent en cours de fonctionnement, que la deuxième oreille ou le bras basculant à évidement oblong casse.

De manière à éviter ces inconvénients, on a proposé, par exemple, d'augmenter l'épaisseur de ces pièces, ce qui conduit à une augmentation de l'encombrement général de l'alternateur et à un accroissement de son coût.

On a également proposé d'éliminer le bras basculant et le bras de maintien en fixant directement l'alternateur sur le bloc-moteur par l'intermédiaire d'un appui en forme de selle, mais dans cette configuration, le réglage de la tension de la courroie s'avère très difficile à réaliser sans l'adjonction d'une pièce intermédiaire par ailleurs difficile à implanter, entre l'alternateur et l'appui en forme de selle comme il est illustré dans le brevet français 2 460 062.

Dans tous les cas, il est difficile de filtrer toutes les vibrations qui peuvent nuire au bon fonctionnement de l'alternateur.

La présente invention résoud ces problèmes et propose à cet effet un alternateur, notamment pour véhicules automobiles, comprenant en particulier un flasque d'extrémité présentant des moyens de fixation dudit alternateur sur un bloc-moteur, caractérisé en ce qu'il comporte, intégré au flasque un dispositif de réglage d'une courroie d'entraînement dudit alternateur.

Selon une forme préférentielle de l'invention le dispositif de réglage est constitué d'un galet-tendeur solidaire d'un bras de réglage, ledit bras de réglage étant lui-même solidaire du flasque et mobile en rotation et de moyens de maintien et/ou de réglage en une position déterminée de l'ensemble galet-tendeur, bras de réglage, ladite position correspondant à une tension optimum de la courroie.

Ainsi tous les moyens de réglage de la tension de la courroie d'entraînement de l'alternateur sont intégrés à l'un de ses flasques et ne nécessitent donc pas d'implantation particulière dans le bloc-moteur du véhicule. Par ailleurs, cette disposition permet à l'ensemble de l'alternateur de présenter une position rigoureusement fixe par rapport au bloc-moteur et par conséquent de ne plus rendre une pièce quelconque fragile mécaniquement. En particulier, dans cette configuration, des moyens anti-vibratoires peuvent facilement être incorporés aux moyens de fixation de l'alternateur.

Selon une première variante les moyens de réglage de la tension de la courroie sont en particulier constitués par un ressort spiral intégré au flasque et au bras de réglage dont l'une des extrémités exerce une force de déplacement sur le galet-tendeur par l'intermédiaire de pions ménagés sur un jambage du bras de réglage.

Avantageusment le bras de réglage comprend une nervure circulaire munie d'une ouverture angulaire constituant avec le flasque un logement pour le ressort spiral.

On appréciera que, dans cette configuration, le ressort spiral permet une mise en position automatique du galet-tendeur correspondant à un équilibrage entre la force exercée par l'extrémité dudit ressort spiral et la force exercée par la tension de la courroie.

Selon une seconde variante le dispositif de réglage de la courroie comprend ménagé sur le bras de réglage un secteur denté destiné à coopérer avec un secteur denté de forme complémentaire solidaire du flasque.

Les secteurs dentés peuvent être réalisés sous forme de pignon ou de crémaillères, et dans ce dernier cas l'une des crémaillères peut être ménagée de matière dans le flasque de l'alternateur.

Les moyens de maintien dans une position déterminée de l'ensemble bras de réglage, galet-tendeur sont alors particulièrement simplifiés puisqu'ils consistent en un simple engrènement des deux crémaillères.

Selon une troisième variante le dispositif de réglage de la tension de courroie comprend en particulier un évidement oblong au travers duquel passe un moyen de maintien en position déterminée de l'ensemble galet-tendeur, bras de réglage.

L'évidement oblong peut alors être ménagé de matière soit dans le flasque de l'alternateur, soit dans le bras de réglage.

Dans certaines configurations, les moyens de maintien dans une position déterminée de l'ensemble bras de réglage, galet-tendeur peuvent être constitués d'un boulon qui constitue l'axe du galet-tendeur.

D'autres caractéristiques et avantages de l'invention apparaîtront plus clairement à la lumière de la description qui va suivre et des dessins annexés, concernant des modes de réalisation particuliers, en référence aux figures où :
- la figure 1 est une vue de face d'une première variante d'un alternateur dont l'un des flasques est équipé d'un dispositif de réglage de la tension courroie utilisant en particulier un ressort spiral ;
- la figure 2 est une vue en coupe partielle selon la ligne II-II de la figure 1 ;
- la figure 3 est une vue de face d'une seconde variante de réalisation dans lequel le dispositif de réglage intégré au flasque d'un alternateur comprend des secteurs dentés complémentaires dont l'un est réalisé sous forme d'un pignon denté ;
- la figure 4 est une vue en coupe partielle selon la ligne brisée IV-IV de la figure 3 ;
- la figure 5 est une vue identique à la figure 3 dans laquelle les secteurs dentés complémentaires sont réalisés sous forme de crémaillères ;
- la figure 6 est une vue en coupe partielle selon la ligne VI-VI de la figure 5 ;
- la figure 7 est une vue de face d'une troisième variante de réalisation de l'invention dans lequel le nombre des pièces nécessaires à son fonctionnement a été réduit au minimum ;
- la figure 8 est une vue en coupe partielle selon la ligne VIII-VIII de la figure 7 ;
- les figures 9 et 11 sont des figures identiques à la figure 7 pour d'autres solutions possibles à cette troisième variante ;
- les figures 10 et 12 sont des coupes partielles suivant, respectivement la ligne X-X et la ligne brisée XII-XII des figures 9 et 11.

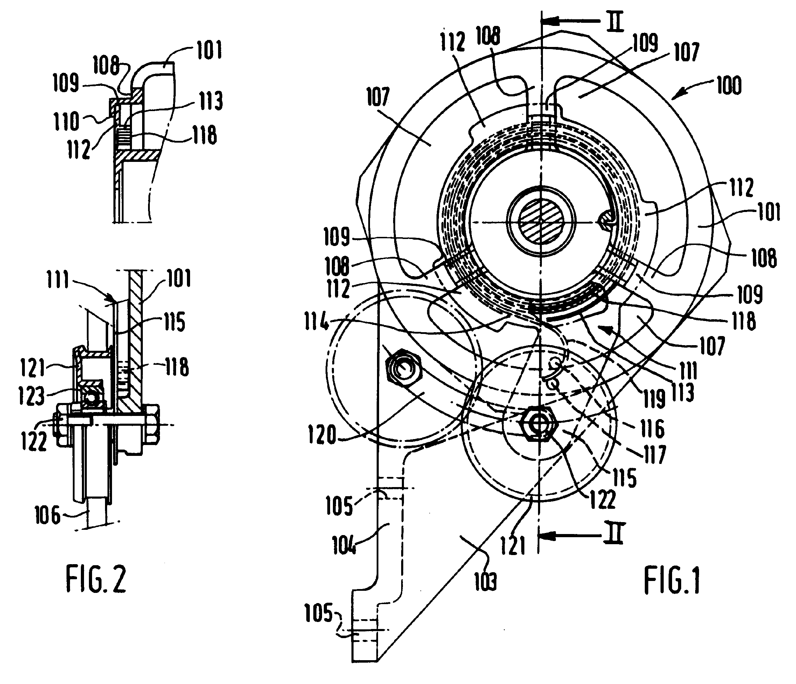

Sur les figures 1 et 2 illustrant une première variante de l'invention, on a représenté un alternateur désigné par 100 dans son ensemble ; cet alternateur 100 comporte à l'une de ses extrémités un flasque 101 qui, dans sa zone centrale sert de palier à l'axe 102 du rotor de l'alternateur 100.

Le flasque 101, de forme générale cylindrique, est prolongé dans sa partie inférieure par une équerre 103 dont l'une des faces 104 présente des trous 105 destinés au passage des vis pour la fixation de l'alternateur 100 sur le bloc-moteur (non représenté).

L'alternateur 100 étant ainsi dans une position fixe, suivant l'invention, on intègre au flasque 101 un dispositif de réglage de la tension de la courroie 106 (figure 2) devant entraîner l'alternateur 100 par l'intermédiaire d'une poulie fixée, de manière connue en soi, sur le flasque 101. Cette poulie, pour simplifier les dessins n'a pas été représentée.

Le flasque 101, dans l'exemple représenté comporte trois ouvertures 107 délimitées par trois nervures radiales 108. Chacune des nervures 108 présente dans leur partie centrale une saillie 109 dont l'extrémité 110 (figure 2) est rabattue.

Les extrémités 110 constituent ainsi des moyens de retenue d'un bras de réglage 111 de forme générale circulaire et présentant trois pales 112 de plus grand diamètre réparties angulairement de manière uniforme et venant coopérer avec lesdites extrémités 110.

Le bras de réglage 111 est de cette manière solidaire du flasque 101 mais est libre en rotation pour des raisons qui seront explicitées plus avant.

Le bras de réglage 111 comporte du côté de l'alternateur une nervure circulaire 113 (figure 2) présentant une ouverture angulaire 114.

Entre deux pales 112, le bras de réglage 111 est prolongé par un jambage 115 comportant deux pions 116,117.

L'ensemble du bras de réglage 111 ainsi constitué sert de logement à un ressort spiral 118, dont l'une des extrémités 119 vient se bloquer entre les pions 116,117.

L'équerre 103 du flasque 101 comporte un évidement oblong 120 concentrique à l'axe 102 du rotor de l'alternateur 100.

Suivant un aspect de l'invention le dispositif de réglage de la tension de la courroie 106 comprend un galet-tendeur 121 rendu solidaire du flasque 101 par l'intermédiaire d'un boulon 122 traversant l'évidement oblong 120. De manière connue en soi, on interpose entre le boulon 122 et le moyeu du galet-tendeur un roulement à billes 123 (figure 2).

Le jambage 115 du bras de réglage 111 comporte un trou circulaire destiné au passage du boulon 122 rendant ainsi solidaire l'ensemble du bras de réglage 111 et donc le ressort spiral 118 du galet-tendeur 121.

Suivant l'invention, l'ensemble galet-tendeur 121, bras de réglage 111 et ressort spiral 118 constituent le dispositif de réglage de la tension de la courroie 106 de l'alternateur 100.

En effet, lorsque le boulon 122 est desserré, la réaction sur le galet-tendeur 121 du ressort spiral 118 par son extrémité 119 à l'encontre des pions 116,117 du bras de réglage 111, fait déplacer le galet-tendeur 121 dans l'évidement oblong 120 jusqu'à ce que la force exercée par le ressort spiral 118 équilibre la force résultant de la tension de la courroie 106. Il suffit alors de resserrer le boulon 122 pour maintenir le galet-tendeur 121 dans la position ainsi définie.

On appréciera que l'ensemble du dispositif de réglage de la courroie ainsi constitué est entièrement intégré au flasque 101 et permet ainsi un positionnement rigoureusement fixe de l'alternateur sur le bloc-moteur.

On appréciera également que, grâce au calibrage de la force du ressort spiral 118, le galet-tendeur 121 se met automatiquement dans la position désirée c'est-à-dire qu'il règle automatiquement la valeur initiale de la tension de la courroie 106.

Comme on peut le voir sur la figure 1, le galet-tendeur 121 peut occuper toute position intermédiaire entre une position initiale représentée en traits pleins et une position finale représentée en traits mixtes correspondant à la mise en butée du boulon 122 contre une extrémité de l'évidement oblong 120.

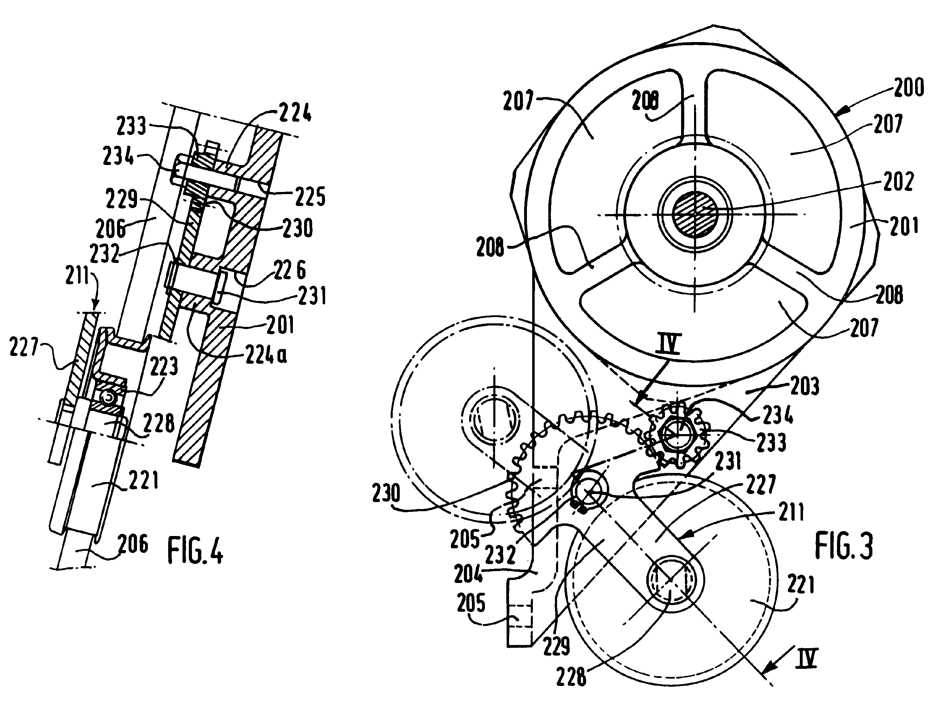

On se réfère maintenant aux figures 3 et 4 qui illustrent une seconde variante du dispositif selon l'invention.

Ce dispositif comporte des éléments identiques ou analogues à celui précédemment décrit, de sorte que ces éléments seront affectés des mêmes références augmentées de cent.

On retrouve ainsi un alternateur 200 comportant un flasque 201 et un axe 202 du rotor.

Le flasque 201 comporte également une équerre 203 avec une face 204 comportant des trous 205 pour la fixation de l'alternateur 200 sur le bloc-moteur.

De la même manière que précédemment on intègre au flasque 201 un dispositif de réglage de la tension de courroie 206.

Le flasque 201 comporte dans l'exemple représenté trois ouvertures 207 délimitées par trois nervures radiales 208.

L'équerre 203 comporte deux bossages 224,224a comportant respectivement un trou taraudé 225 débouchant et un trou lisse également débouchant par un lamage 226.

Le bras de réglage 211 présente une première partie 227 de forme générale oblongue présentant un trou permettant le passage d'un axe de maintien 228 pour un galet-tendeur 221. Un roulement à billes 223 est interposé entre l'axe 228 et le moyeu du galet-tendeur 221. Le galet-tendeur 221 est ainsi solidaire du bras de réglage 211. Ledit bras de réglage 211 comporte une seconde partie 229 se présentant sous la forme générale d'un secteur denté 230.

Le centre du secteur denté 230 présente un trou circulaire destiné au passage d'un axe épaulé 231 immobilisé en translation par exemple avec un circlips 232.

Ainsi le bras de réglage 211 est rendu solidaire du flasque 201 et peut pivoter autour de l'axe 231.

Le secteur denté 230 du bras de réglage 211 coopère avec un secteur denté de forme complémentaire solidaire du flasque 201 réalisé dans l'exemple représenté sous forme d'un pignon 233.

Ce pignon 233 est rendu solidaire du flasque 201 par une vis 234 coopérant avec le trou taraudé 225.

L'ensemble bras de réglage 211, galet-tendeur 221 et le pignon 233 constitue l'ensemble de réglage de la tension de la courroie 206 et cet ensemble est intégré au flasque 201.

Pour opérer le réglage désiré, il suffit de desserrer la vis 234, de faire pivoter l'ensemble bras de réglage 211, galet-tendeur 221 autour de l'axe 231 jusqu'à l'obtention de la valeur de tension désirée puis de resserrer la vis 234 pour maintenir l'ensemble précité dans la position ainsi définie.

Comme on peut le voir sur la figure 3, le galet-tendeur 221 peut occuper toute position intermédiaire entre une position initiale représentée en traits pleins et une position finale représentée en traits mixtes correspondant au déplacement angulaire du secteur denté 230.

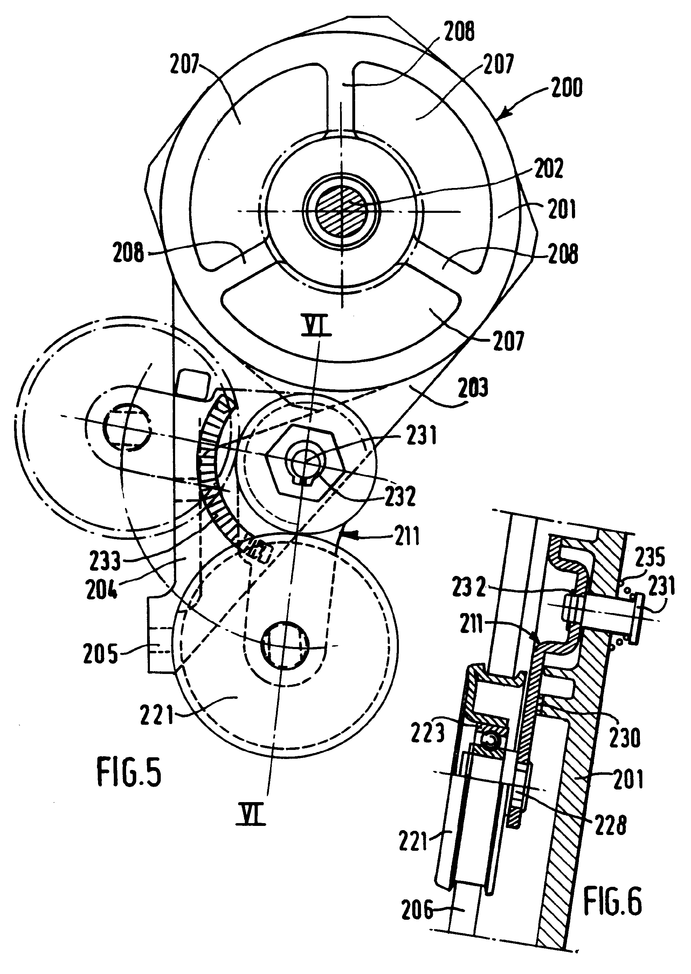

Les figures 5 et 6 illustrent une forme de réalisation légèrement différente de cette seconde variante et c'est pourquoi les éléments ayant des fonctions identiques ou analogues portent les mêmes références que sur les figures 3 et 4. Pour ne pas alourdir le texte leur description ne sera donc pas repris en détail.

Dans cette forme de réalisation le bras de réglage 211, solidaire du galet-tendeur 221 et mobile en rotation par l'axe 231 comporte également un secteur denté 230 réalisé cette fois sous forme d'une crémaillère coopérant avec un secteur denté complémentaire réalisé également sous forme d'une crémaillère 233 ménagée de matière dans le flasque 201.

L'axe épaulé 231 maintient en prise les secteurs dentés ou crémaillères 230 et 233 grâce à l'action d'un ressort 235 (figure 6).

Pour régler la tension de la courroie il suffit de désaccoupler les crémaillères 230 et 233 en poussant l'axe épaulé 231 à l'encontre du ressort 235 puis de faire tourner l'ensemble bras de réglage 211 galet-tendeur 221 jusqu'à la position désirée.

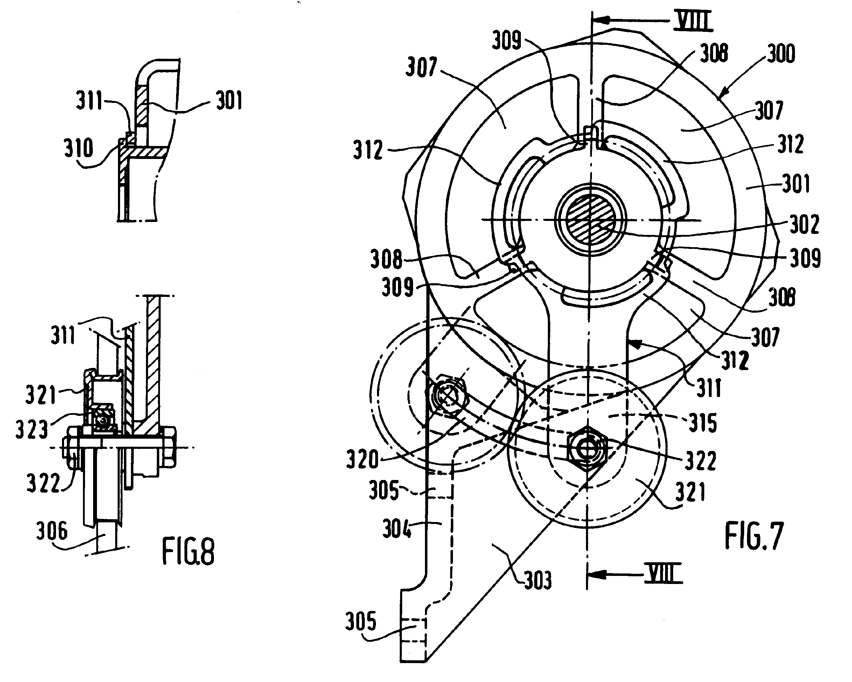

On se réfère maintenant aux figures 7 à 12 qui illustrent trois solutions différentes pour une troisième variante du dispositif selon l'invention qui permet comme précédemment d'incorporer au flasque d'un alternateur un dispositif de réglage de la tension de la courroie. Il s'agit de solutions plus simples nécessitant un moins grand nombre de pièces pour leur réalisation.

Comme précédemment l'alternateur et le dispositif de réglage comportent un certain nombre d'organes analogues ou identiques à ceux des variantes déjà décrites, de sorte que ces organes seront affectés des mêmes références augmentées de cent sans être décrits en détail.

Dans cette troisième variante on retrouve un alternateur 300 comportant un flasque 301 et un axe 302 du rotor.

Le flasque 301 comprend toujours une équerre 303 et des trous 305 pour la fixation de l'alternateur sur le bloc-moteur.

Le bras de réglage 311 comporte des pales 312 coopérant avec des saillies 310 des nervures 308 du flasque 301. Ledit bras de réglage 311 est ainsi rendu solidaire dudit flasque 301 tout en étant libre en rotation.

L'une des pales 312 est prolongée par une partie oblongue 315 à l'extrémité de laquelle on vient fixer un galet-tendeur 321 sur lequel va passer la courroie 306.

L'équerre 303 du flasque 301 comporte un évidement oblong 320 concentrique à l'axe du rotor 302 et à travers lequel passe un boulon 322 servant à la fois d'axe au galet-tendeur 321 et de moyen de maintien en position de l'ensemble bras de réglage 311, galet-tendeur 321.

Le réglage s'effectue d'une manière identique aux précédentes variantes : on desserre le boulon 322 et l'on fait pivoter le bras de réglage 311 jusqu'à la position désirée.

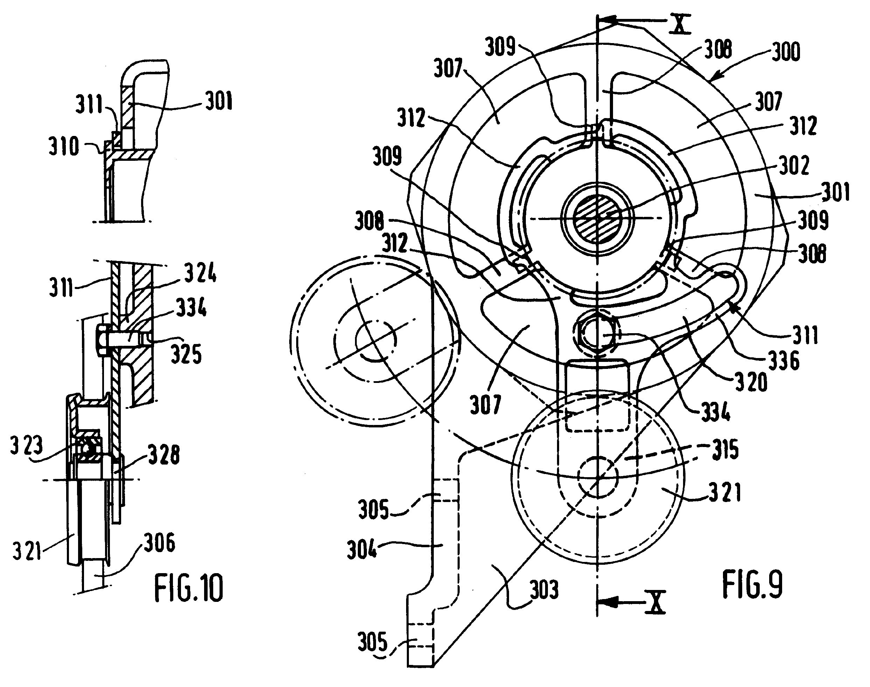

Les figures 9 et 10 illustrent une seconde solution possible à cette troisième variante. Dans cette solution, l'évidement oblong 320 n'est plus ménagé de matière sur le flasque 301 mais dans un jambage 336 du bras de réglage 311. Le boulon 322 de la première solution est remplacé par une vis 334 venant coopéer avec un trou taraudé 325 prévu à cet effet dans un bossage 324a du flasque 301.

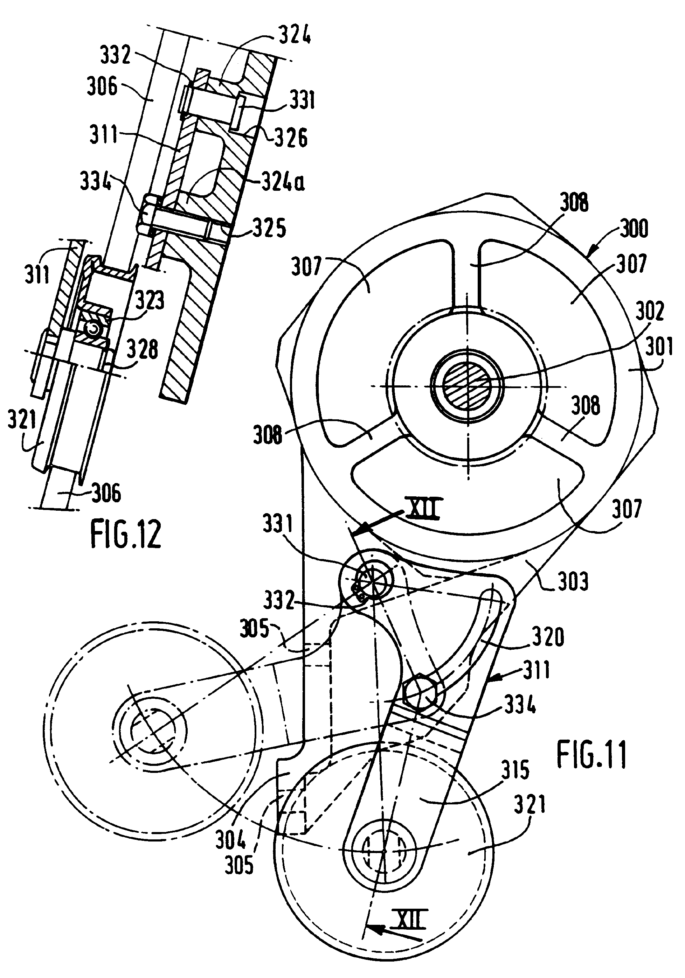

Les figures 11 et 12 illustrent une troisième solution possible à cette troisième variante. Dans cette solution, l'évidement oblong 320 est également ménagé dans le bras de réglage 311. Ce dernier n'est plus centré sur l'axe du rotor 302 mais peut tourner autour d'un axe épaulé 331 immobilisé en translation par rapport au flasque 301 par un circlips 332. Une vis 334 permet le maintien en position de l'ensemble bras de réglage 311 galet-tendeur 321 en position.

Ce genre de solution présente en particulier l'avantage de dégager toute la partie centrale du flasque 301, ce qui permet par exemple de pouvoir y implanter un ventilateur de refroidissement externe.

Les différentes solutions qui viennent d'être décrites montrent à l'évidence que les dispositifs de réglage de la tension de la courroie intégrés à un flasque d'alternateur peuvent être de structures très variables.

## Revendications

1. Alternateur (100;200;300), notamment pour véhicules automobiles, comprenant en particulier un flasque d'extrémité (101;201;301) présentant des moyens de fixation dudit alternateur (100;200;300) sur un bloc-moteur, caractérisé en ce qu'il comporte, intégré au flasque (101;201;301) un dispositif de réglage (111,121;211,221;311,321) d'une courroie d'entraînement (106;206;306) dudit alternateur (100;200;300).

2. Alternateur selon la revendication 1, caractérisé en ce que le dispositif de réglage est constitué d'un galet-tendeur (121;221;321) solidaire d'un bras de réglage (111;211;311), ledit bras de réglage (111;211;311) étant lui-même solidaire du flasque (101;201;301) et mobile en rotation et de moyens de maintien et/ou de réglage (118,120,122;230,233,234,231; 320,334,322) en une position déterminée de l'ensemble galet-tendeur (121;221;321) bras de réglage (111;211;311), ladite position correspondant à une tension optimum de la courroie (106;206;306).

3. Alternateur selon l'une quelconque des revendications précédentes, caractérisé en ce que les moyens de réglage de la tension de la courroie (106) sont en particulier constitués par un ressort spiral (118) intégré au flasque (101) et au bras de réglage (11) dont l'une des extrémités (119) exerce une force de déplacement sur le galet-tendeur (121) par l'intermédiaire de pions (116,117) ménagés sur un jambage (115) du bras de réglage (111).

4. Alternateur selon la revendication 3, caractérisé en ce que les moyens de réglage de la tension de la courroie (106) comprennent un évidement oblong (120) ménagé dans une équerre (103) du flasque (101).

5. Alternateur selon l'une des revendications 3 ou 4, caractérisé en ce que le galet-tendeur (121) est rendu solidaire du bras de réglage (111) et du flasque (101) par un boulon (122) traversant l'évidement oblong (120), ledit boulon (122) constituant ainsi les moyens de maintien en position du dispositif de réglage.

6. Alternateur selon la revendication 3, caractérisé en ce que le bras de réglage (111) comprend une nervure circulaire (113) munie d'une ouverture angulaire (114) constituant avec le flasque (101) un logement pour le ressort spiral (118).

7. Alternateur selon l'une des revendications 1 à 2, caractérisé en ce que le dispositif de réglage de la courroie (206) comprend ménagé sur le bras de réglage (211) un secteur denté (230) destiné à coopérer avec un secteur denté de forme complémentaire (230) solidaire du flasque (201).

8. Alternateur selon la revendication 7, caractérisé en ce que le secteur denté (233) est un pignon.

9. Alternateur selon la revendication 7, caractérisé en ce que l'axe de rotation du bras de réglage (211) est constitué d'un axe épaulé (231) solidaire du flasque (201).

10. Alternateur selon la revendication 8, caractérisé en ce que le moyen de maintien en position de l'ensemble bras de réglage (211), galet-tendeur (221) est constitué d'une vis (234) traversant le pignon (233) et coopérant avec un trou taraudé (225) du flasque (201).

11. Alternateur selon la revendication 7, caractérisé en ce que les secteurs dentés (230,233) sont des crémaillères.

12. Alternateur selon la revendication 11, caractérisé en ce que la crémaillère (233) est ménagée de matière dans le flasque (201).

13. Alternateur selon la revendication 10, caractérisé en ce que le moyen de maintien en position de l'ensemble bras de réglage (211) galet-tendeur (221) est constitué d'un ressort (235) agissant sur l'axe épaulé (231) de manière à maintenir en appui l'un dans l'autre les secteurs dentés (230,233).

14. Alternateur selon l'une des revendications 1 ou 2, caractérisé en ce que le dispositif de réglage de la tension de courroie (306) comprend en particulier un évidement oblong (320) au travers duquel passe un moyen de maintien (322,334) en position déterminée de l'ensemble galet-tendeur (321) bras de réglage (311).

15. Alternateur selon la revendication 14, caractérisé en ce que l'évidement oblong (320) est ménagé dans une équerre (303) du flasque (301).

16. Alternateur selon la revendication 14, caractérisé en ce que l'évidement oblong (320) est ménagé dans le bras de réglage (311).

17. Alternateur selon la revendication 14, caractérisé en ce que le moyen de maintien est constitué d'un boulon (322), ledit boulon (322) constituant l'axe du galet-tendeur (321).

18. Alternateur selon la revendication 14, caractérisé en ce que le moyen de maintien est constitué d'une vis (334) coopérant avec un trou taraudé (325) ménagé dans le flasque (301).

19. Alternateur selon la revendication 14, caractérisé en ce que l'axe de rotation du bras de réglage (211) est constitué d'un axe épaulé (331) solidaire du flasque (201).

## Patentansprüche

1. Wechselstromerzeuger (100; 200; 300), insbesondere für Kraftfahrzeuge, der im besonderen ein endseitiges Lagerschild (101; 201; 301) umfaßt, das Befestigungsmittel für die Befestigung dieses Wechselstromerzeugers (100; 200; 300) an einem Motorblock aufweist, **dadurch** **gekennzeichnet**, daß er eine in das Lagerschild (101; 201; 301) eingebaute Riemenspannvorrichtung (111, 121; 211, 221; 311, 321) für einen Treibriemen (106; 206; 306) des Wechselstromerzeugers (100; 200; 300) umfaßt.

2. Wechselstromerzeuger nach Anspruch 1, **dadurch** **gekennzeichnet**, daß die Riemenspannvorrichtung aus einer Spannrolle (121; 221; 321) besteht, die mit einem Verstellarm (111; 211; 311) verbunden ist, wobei der Verstellarm (111; 211; 311) wiederum mit dem Lagerschild (101; 201; 301) verbunden und drehbeweglich angeordnet ist, sowie aus Halte- und/ oder Verstellmitteln (118, 120, 122; 230, 233, 234, 231; 320, 334, 322) für eine bestimmte Position der Einheit aus Spannrolle (121; 221; 321) und Verstellarm (111; 211; 311), wobei diese Position einer optimalen Spannung des Riemens (106; 206; 306) entspricht.

3. Wechselstromerzeuger nach einem der vorangehenden Ansprüche, **dadurch gekennzeichnet**, daß die Riemenspannmittel für den Riemen (106) insbesondere aus einer Spiralfeder (118) bestehen, die in das Lagerschild (101) und in den Verstellarm (111) eingebaut ist und die an einem ihrer Enden (119) über Paßstifte (116, 117), die an einer Strebe (115) des Verstellarms (111) vorgesehen sind, eine Verschiebekraft auf die Spannrolle (121) ausübt.

4. Wechselstromerzeuger nach Anspruch 3, **dadurch** **gekennzeichnet**, daß die Riemenspannmittel für den Riemen (106) eine längliche Aussparung (120) umfassen, die in einem Stützwinkel (103) des Lagerschilds (101) vorgesehen ist.

5. Wechselstromerzeuger nach Anspruch 3 oder 4, **dadurch gekennzeichnet**, daß die Spannrolle (121) mit dem Verstellarm (111) und dem Lagerschild (101) durch einen Bolzen (122) verbunden ist, der durch die längliche Aussparung (120) hindurchgeht, wobei der Bolzen (122) so die Haltemittel für das Halten der Riemenspannvorrichtung in ihrer Position bildet.

6. Wechselstromerzeuger nach Anspruch 3, **dadurch** **gekennzeichnet**, daß der Verstellarm (111) eine kreisförmige Rippe (113) mit einer Winkelöffnung (114) umfaßt, die zusammen mit dem Lagerschild (101) eine Aufnahme für die Spiralfeder (118) bildet.

7. Wechselstromerzeuger nach einem der Ansprüche 1 bis 2, **dadurch gekennzeichnet**, daß die Riemenspannvorrichtung für den Riemen (206) einen an dem Verstellarm (211) vorgesehenen Zahnbogen (230) umfaßt, der dazu bestimmt ist, mit einem dazu passend ausgeformten Zahnbogen (233) zusammenzuwirken, der mit dem Lagerschild (201) verbunden ist.

8. Wechselstromerzeuger nach Anspruch 7, **dadurch gekennzeichnet**, daß es sich bei dem Zahnbogen (233) um einen Ritzel handelt.

9. Wechselstromerzeuger nach Anspruch 7 , **dadurch gekennzeichnet**, daß die Drehachse des Verstellarms (211) durch einen Schulterstift (231) gebildet wird, der mit dem Lagerschild (201) verbunden ist.

10. Wechselstromerzeuger nach Anspruch 8, **dadurch gekennzeichnet**, daß das Haltemittel für das Halten der Einheit aus Verstellarm (211) und Spannrolle (221) in ihrer Position aus einer Schraube (234) besteht, die durch den Ritzel (233) hindurchgeht und mit einem Gewindeloch (225) des Lagerschilds (201) zusammenwirkt.

11. Wechselstromerzeuger nach Anspruch 7, **dadurch gekennzeichnet**, daß es sich bei den Zahnbögen (230, 233) um Zahnstangen handelt.

12. Wechselstromerzeuger nach Anspruch 11, **dadurch gekennzeichnet**, daß die Zahnstange (233) einstückig in dem Lagerschild (201) vorgesehen ist.

13. Wechselstromerzeuger nach Anspruch 10, **dadurch gekennzeichnet**, daß das Haltemittel für das Halten der Einheit aus Verstellarm (211) und Spannrolle (221) in ihrer Position aus einer Feder (235) besteht, die so auf den Schulterstift (231) einwirkt, daß die Zahnbögen (230, 233) ineinander in Anlage gehalten werden.

14. Wechselstromerzeuger nach einem der Ansprüche 1 oder 2, **dadurch** **gekennzeichnet**, daß die Riemenspannvorrichtung für den Riemen (306) insbesondere eine längliche Aussparung (320) umfaßt, durch die ein Haltemittel (322, 334) für das Halten der Einheit aus Spannrolle (321) und Verstellarm (311) in einer bestimmten Position hindurchgeht.

15. Wechselstromerzeuger nach Anspruch 14, **dadurch** **gekennzeichnet**, daß die längliche Aussparung (320) in einem Stützwinkel (303) des Lagerschilds (301) vorgesehen ist.

16. Wechselstromerzeuger nach Anspruch 14, **dadurch gekennzeichnet**, daß das Haltemittel aus einem Bolzen (322) besteht, wobei der Bolzen (322) die Achse der Spannrolle (321) bildet.

17. Wechselstromerzeuger nach Anspruch 14, **dadurch gekennzeichnet**, daß das Haltemittel aus einer Schraube (334) besteht, die mit einem Gewindeloch (325) zusammenwirkt, die in dem Lagerschild (301) vorgesehen ist.

18. Wechselstromerzeuger nach Anspruch 14, **dadurch gekennzeichnet**, daß die Drehachse des Verstellarms (211) durch einen mit dem Lagerschild (201) verbundenen Schulterstift (331) gebildet wird.

## Claims

1. An alternator (100; 200; 300), especially for motor vehicles, in particular comprising an end plate (101; 201; 301) having means for attaching said alternator (100; 200; 300) to an engine unit,
**characterised in that** it comprises, integrated on the plate (101; 201; 301), an adjustment device (111, 121; 211, 221; 311, 321) for a drive belt (106; 206; 306) of said alternator (100; 200; 300).

2. An alternator according to Claim 1,
**characterised in that** the adjustment device is formed by a belt tensioning roller (121; 221; 321) integral with an adjustment arm (111; 211; 311), the said adjustment arm (111; 211; 311) itself being integral with the plate (101; 201; 301) and rotatable, and means (118, 120, 122; 230, 233, 234, 231; 320, 334, 322) for retaining and/or adjusting the belt tensioning roller (121; 221; 331) - adjustment arm (111; 211; 311) unit in a determined position, the said position corresponding to an optimum tension of the belt (106; 206; 306).

3. An alternator according to any one of the preceding claims,
**characterised in that** the means for adjusting the tension of the belt (106) are in particular formed by a spiral spring (118) integrated on the plate (101) and on the adjustment arm (11), one of the ends (119) of which exerts a displacement force on the belt tensioning roller (121) by means of studs (116, 117) provided on a leg (115) of the adjustment arm (111).

4. An alternator according to Claim 3,
**characterised in that** the means for adjusting the tension of the belt (106) comprise an oblong recess (120) provided in an angle iron (103) of the plate (101).

5. An alternator according to one of Claims 3 or 4,
**characterised in that** the belt tensioning roller (121) is made integral with the adjustment arm (111) and the plate (101) by a bolt (122) passing through the oblong recess (120), the said bolt (122) thus forming position retention means for the adjustment device.

6. An alternator according to Claim 3,
**characterised in that** the adjustment arm (111) comprises a circular rib (113) equipped with an angular aperture (114) forming with the plate (101) a housing for the spiral spring (118).

7. An alternator according to one of Claims 1 to 2,
**characterised in that** the adjustment device for the belt (206) comprises on the adjustment arm (211) a toothed sector (230) intended to cooperate with a toothed sector having a complementary shape (230) integral with the plate (201).

8. An alternator according to Claim 7,
**characterised in that** the toothed sector (233) is a pinion.

9. An alternator according to Claim 7,
**characterised in that** the axis of rotation of the adjustment arm (211) is formed by a shouldered axle (231) integral with the plate (201).

10. An alternator according to Claim 8,
**characterised in that** the means for retaining the adjustment arm (211) - belt tensioning roller (221) unit in position is formed by a screw (234) passing through the pinion (233) and cooperating with a tapped hole (225) in the plate (201).

11. An alternator according to Claim 7,
**characterised in that** the toothed sectors (230, 233) are racks.

12. An alternator according to Claim 11,
**characterised in that** the rack (233) is provided in one piece in the plate (201).

13. An alternator according to Claim 10,
**characterised in that** the means for retaining the adjustment arm (211) - belt tensioning roller (221) unit in position is formed by a spring (235) acting on the shouldered axle (231) so as to keep the toothed sectors (230, 233) bearing on one another.

14. An alternator according to one of Claims 1 or 2,
**characterised in that** the device for adjusting the tension of the belt (306) comprises in particular an oblong recess (320) through which passes a means (322, 334) for retaining the belt tensioning roller (321) - adjustment arm (311) unit in a determined position.

15. An alternator according to Claim 14,
**characterised in that** the oblong recess (320) is provided in an angle iron (303) of the plate (301).

16. An alternator according to Claim 14,
**characterised in that** the oblong recess (320) is provided in the adjustment arm (311).

17. An alternator according to Claim 14,
**characterised in that** the retention means is formed by a bolt (322), the said bolt (322) forming the axis of the belt tensioning roller (321).

18. An alternator according to Claim 14,
**characterised in that** the retention means is formed by a screw (334) cooperating with a tapped hole (325) provided in the plate (301).

19. An alternator according to Claim 14,
**characterised in that** the axis of rotation of the adjustment arm (211) is formed by a shouldered axle (331) integral with the plate (201).
